# EUROPEAN PATENT APPLICATION

(11) **EP 2 136 340 A1**
(43) Date of publication of application: **23.12.2009**
(21) Application number: 09011648.4
(22) Date of filing: 11.08.2008
(51) Int. Cl.: G07F 7/08, G07F 7/10

(54) **Electronic wallet device and method of using electronic value**

(30) Priority: 21.08.2007 JP 2007215140
(62) Divisional of application: 08252660.9
(71) Applicant: Sony Corporation, Tokyo 108-0075 (JP)
(72) Inventor: Sako, Yoichiro, Tokyo 108-0075 (JP); Akagi, Tadao, Tokyo 108-0075 (JP); Kon, Takayasu, Tokyo 108-0075 (JP); Kamada, Yasunori, Tokyo 108-0075 (JP); Abe, Miki, Tokyo 108-0075 (JP); Takehara, Mitsuru, Tokyo 108-0075 (JP); Sugino, Akinobu, Tokyo 108-0075 (JP); Matsumoto, Jun, Tokyo 108-0075 (JP); Fukushima, Takashi, Tokyo 108-0075 (JP)
(74) Representative: Robinson, Nigel Alexander Julian

(57) **Abstract**

There is provided an electronic wallet device using electronic value concerning a prescribed service by means of a non-contact type IC card capable of non-contact communication with an external unit, including a holding section to hold the non-contact type IC card, an external communication antenna to perform non-contact communication with the external unit, a card communication antenna to perform non-contact communication with the non-contact type IC card held in the holding section, a value storing section capable of storing electronic value, a charge section to charge the value storing section with electronic value, and a value transfer section to transfer electronic value stored in the value storing section to the non-contact type IC card on condition of success of authentication of an owner of the electronic wallet device by an authentication section when using electronic value by means of the non-contact type IC card.

## Description

The present invention relates to an electronic wallet device and a method of using electronic value.

Services using a non-contact type IC card which includes an antenna coil and an IC chip are becoming increasingly widely available in daily use. A non-contact type IC card can perform data communication when it is simply held over a reader/writer of a host device without being taken out of a wallet, an IC card holder or the like, thus being highly convenient. Therefore, such a non-contact type IC card is widely used in IC card systems which provide various services such as an electronic money service and a transportation ticket gate service, for example.

An electronic money service involves a large variety of services, and there are wide-ranging kinds of non-contact type IC cards that are available for respective services (which are hereinafter referred to as the electronic money cards). Thus, it is necessary for a user to have a plurality of electronic money cards which correspond to respective services in order to use different electronic money services. Further, with the advent of multi-application IC cards, uses increasingly have a plurality of non-contact type IC cards with an electronic money function. In view of this, in order to carry a plurality of non-contact type IC cards all together, an IC card holder in which an anti-interference part is placed between two non-contact type IC cards is proposed in Japanese Unexamined Patent Application Publication No. 2005-11044, for example.

The above-described electronic money system circulates currency as digital information by transmitting and receiving digital information using a network or an IC card. For example, there are an electronic money system using an IC card which performs electronic settlement through an IC card that stores currency data and an electronic money system using a network which performs electronic settlement by transmitting and receiving currency data through a network.

However, electronic money is anonymous data which has anonymity like cash, and it is unable to identify an owner of electronic money by checking data of the electronic money. Generally, if someone finds cash on the road, the cash is available for anyone, putting aside the morality of the behavior. Likewise, electronic money having anonymity does not contain description about an owner name, and a party which receives payment of electronic money does not make reference to whose electronic money it is, tacitly accepting that it is owned by a payer. Accordingly, in the event of losing an electronic money card which stores electronic money, in order for an owner to have it back, it is necessary that the card is found by a well-intentioned person and the owner has taken a note of the card number or can prove a place, a time or the like where the card is lost. Therefore, it is difficult to retrieve lost electronic money because of its anonymity, having an issue of security. Due to such an issue, not a few people hesitate to have electronic money.

On the other hand, the anonymity of electronic money is advantageous in some cases such as when a rightful user of electronic money wishes to keep uses unknown to others because it is not identifiable by whom and for what purpose the electronic money is used.

As described above, electronic money, being unidentifiable data having anonymity, has the advantage of convenience for a user because uses are kept unknown to others while having the disadvantage of low security against loss or the like, both because of its anonymity. Therefore, there has been a need for a method of using electronic money which ensures security and maintains anonymity for rightful uses. Such a method has been needed also for data equivalent to currency such as a point, a coupon or the like which is stored in a non-contact type IC card, besides for currency data such as electronic money.

In light of this, it is desirable to provide a novel and improved electronic wallet device and a method of using electronic value that enable uses of electronic money or the like which ensure security and maintain anonymity.

Various respective aspects and features of the invention are defined in the appended claims. Combinations of features from the dependent claims may be combined with features of the independent claims as appropriate and not merely as explicitly set out in the claims.
According to an embodiment of the present invention, there is provided an electronic wallet device using electronic value concerning a prescribed service by means of a non-contact type IC card capable of non-contact communication with an external unit, which includes a holding section to hold the non-contact type IC card; an external communication antenna to perform non-contact communication with the external unit; a card communication antenna to perform non-contact communication with the non-contact type IC card held in the holding section; a value storing section capable of storing electronic value; a charge section to charge the value storing section with electronic value by communicating with the external unit via the external communication antenna; an authentication section to perform authentication of an owner of the electronic wallet device; and a value transfer section to transfer electronic value stored in the value storing section to the non-contact type IC card via the card communication antenna on condition of success of authentication by the authentication section when using electronic value by means of the non-contact type IC card.

In this configuration, it is possible to charge the value storing section of the electronic wallet device with electronic value in advance, and when using the electronic value by means of the non-contact type IC card, transfer the electronic value stored in the value storing section to the non-contact type IC card on condition of success of authentication by the authentication section and use the electronic value to the external unit using the non-contact type IC card. Because authentication of an owner of the electronic wallet device is necessary before transferring the electronic value stored in the electronic wallet device to the non-contact type IC card, only the owner can transfer the electronic value. Accordingly, the electronic wallet device can serve as a non-anonymous device which requires authentication upon use of the electronic value. On the other hand, once electronic value is transferred from the value storing section of the electronic wallet device to the non-contact type IC card, the electronic value can be used by means of the anonymous non-contact type IC card which does not require authentication. Thus, in combination of the anonymous non-contact type IC card and the non-anonymous and secure electronic wallet device, it is possible to achieve uses of electronic money or the like which maintain anonymity and ensure security by transferring electronic value from the electronic wallet device to the non-contact type IC card only at the time of using the electronic value.

The electronic wallet device may further include a communication section to receive a transaction request concerning the service from the external unit via the external communication antenna, and the value transfer section may transfer the amount of electronic value specified by the transaction request from the value storing section to the non-contact type IC card.

The electronic wallet device may further include a transfer amount setting section to set the amount of electronic value to be transferred from the value storing section to the non-contact type IC card, and the value transfer section may transfer the amount of electronic value set by the transfer amount setting section from the value storing section to the non-contact type IC card.

The value transfer section may transfer electronic value stored in the non-contact type IC card inserted in the holding section to the value storing section.

When transferring electronic value from the value storing section to the non-contact type IC card, authentication of an owner of the electronic wallet device may be performed by the authentication section and, when performing a transaction of electronic value between the external unit and the non-contact type IC card via the electronic wallet device, authentication of an owner of the non-contact type IC card may not be performed.

Electronic value stored in the non-contact type IC card may be electronic value specific to a service to which the non-contact type IC card corresponds, and electronic value stored in the value storing section may be electronic value common to a plurality of services.

The electronic wallet device may further include a value use section to use electronic value stored in the value storing section for the external unit on condition of success of authentication by the authentication section or transmission of owner information of the electronic wallet device to the external unit, when using electronic value for the external unit by means of the electronic wallet device without using the non-contact type IC card.

According to another embodiment of the present invention, there is provided a method of using electronic value concerning a prescribed service by means of a non-contact type IC card in an electronic wallet device including a holding section to hold the non-contact type IC card capable of non-contact communication with an external unit, an external communication antenna to perform non-contact communication with the external unit, a card communication antenna to perform non-contact communication with the non-contact type IC card held in the holding section, and a value storing section capable of storing electronic value. The method includes the steps of charging the value storing section with electronic value by communicating with the external unit via the external communication antenna; performing authentication of an owner of the electronic wallet device; and transferring electronic value stored in the value storing section to the non-contact type IC card via the card communication antenna on condition of success of authentication of the owner of the electronic wallet device when using electronic value by means of the non-contact type IC card.

According to the embodiments of the present invention described above, it is possible to achieve uses of electronic money or the like which maintain anonymity and ensure security.

Embodiments of the invention will now be described with reference to the accompanying drawings, throughout which like parts are referred to by like references, and in which:
FIG. 1 is a perspective view showing the external structure of the electronic wallet device according to a first embodiment of the present invention.
FIGS. 2A to 2C are explanatory views showing the situations of using the electronic wallet device according to the embodiment.
FIG. 3 is a block diagram showing an example of the configuration of a reader/writer of a host device and a non-contact type IC card in an IC card system according to the embodiment.
FIG. 4 is a block diagram showing the schematic configuration of the electronic wallet device according to the embodiment.
FIG. 5 is an explanatory view showing the scheme of charge of electronic value in the electronic wallet device according to the embodiment.
FIG. 6 is an explanatory view showing the scheme of use of electronic value in the electronic wallet device according to the embodiment.
FIG. 7 is an explanatory view showing the scheme of transfer of electronic value between a plurality of electronic wallet devices according to the embodiment.
Fig. 8 is a flowchart showing an example of a method of using electronic value in the electronic wallet device according to the embodiment.
Fig. 9 is a flowchart showing another example of a method of using electronic value in the electronic wallet device according to the embodiment.
Fig. 10 is a sequence chart showing an example of a payment process of electronic value using the electronic wallet device according to the embodiment.
Fig. 11 is a sequence chart showing another example of a payment process of electronic value using the electronic wallet device according to the embodiment.
Fig. 12 is a sequence chart showing another example of a payment process of electronic value using the electronic wallet device according to the embodiment.
Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

An electronic wallet device according to an embodiment of the present invention has a structure that combines an anonymous non-contact type IC card (electronic money card etc.) which has anonymity and a non-anonymous electronic wallet which has security. The electronic wallet device stores electronic value in the non-anonymous electronic wallet device rather than storing it in the anonymous non-contact type IC card during normal time when not using electronic money, and it transfers electronic value from the electronic wallet device to the non-contact type IC card only when using the electronic value. The term "non-anonymous" means that, when electronic value is used by means of a certain device, an owner of the device is identifiable. On the contrary, the term "anonymous" means that, when electronic value is used by means of a certain device, an owner of the device is not identifiable. The electronic wallet device having such a feature is described hereinafter in detail.

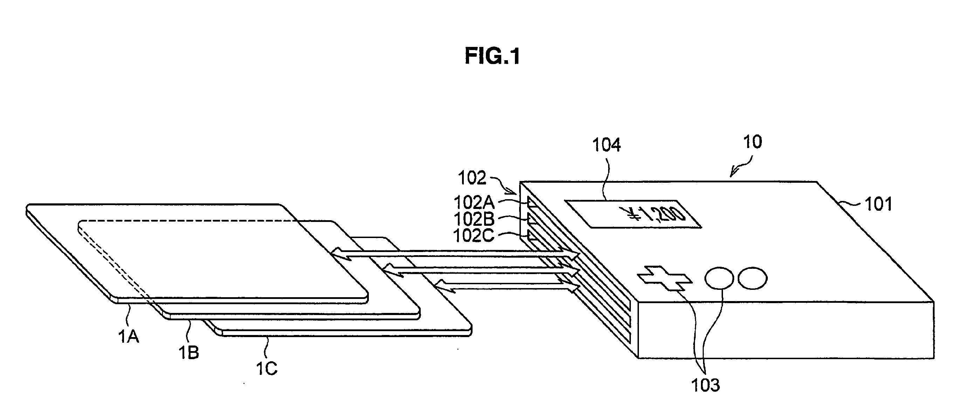

The appearance of an electronic wallet device according to a first embodiment of the present invention is described hereinafter with reference to FIG. 1. FIG. 1 is a perspective view showing the external structure of an electronic wallet device 10 of this embodiment.

As shown in FIG. 1, the electronic wallet device 10 of this embodiment is an electronics device with a size that allows a user to carry it in a pocket of clothing, a bag, or the like. The electronic wallet device 10 serves as a holding case which can hold a plurality of non-contact type IC cards 1A, 1B and 1C (which may be hereinafter referred to collectively as the non-contact type IC cards 1). A user can carry the plurality of non-contact type IC cards 1 collectively by holding them in the electronic wallet device 10.

The electronic wallet device 10 includes a casing 101 having a substantially rectangular solid shape, a holding section 102 which detachably holds a plurality of non-contact type IC cards 1, an operating section 103 which serves as a user input interface, and a display section 104 which displays information regarding a service using the non-contact type IC card 1, for example.

The holding section 102 includes a plurality of slots 102A, 102B and 102C which are arranged in parallel with each other on one side surface of the casing 101, for example. The non-contact type IC cards 1A to 1C are inserted to and removed from the slots 102A to 102C, so that the non-contact type IC cards 1 can be detachably attached to the electronic wallet device 10.

Although the electronic wallet device 10 in the example of FIG. 1 includes the three slots 102A to 102C so as to hold the three non-contact type IC cards 1A to 1C, embodiments of the present invention are not limited thereto. For example, the number of the non-contact type IC cards 1 which can be held in the electric wallet device 10 may be one, two or more than three. The number of the slots of the holding section 102 may be one in the case of holding only one non-contact type IC card 1. If all of the non-contact type IC cards 1 to be held have the same shape, all of the slots 102A to 102C may have the same shape. However, in order to cope with various shapes or sizes of non-contact type IC cards 1, the holding section 102 may have different shapes of slots 102A to 102C.

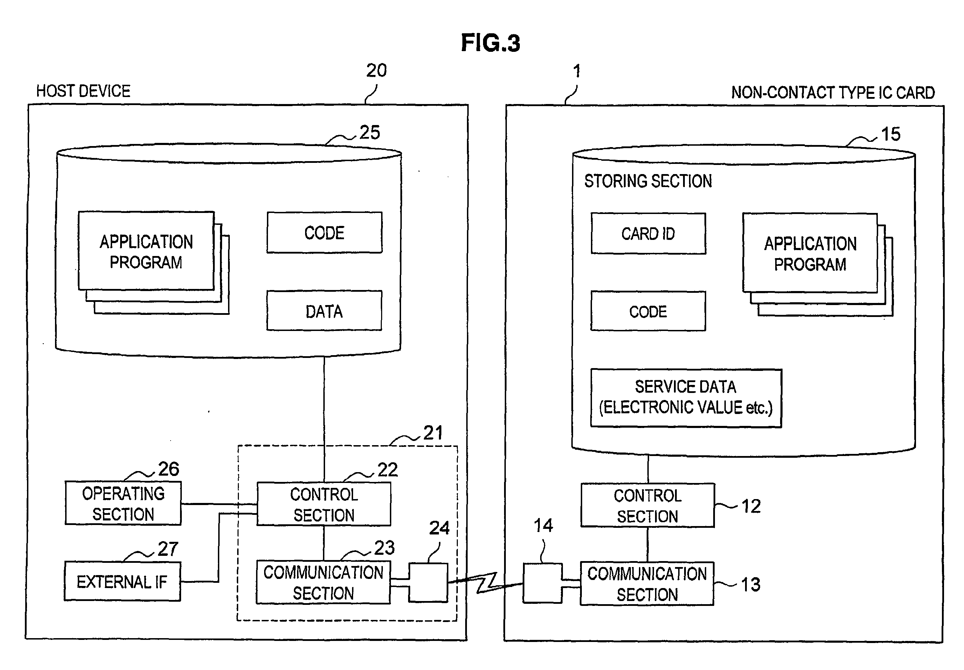

The non-contact type IC card 1 according to this embodiment is described hereinafter in detail. The non-contact type IC card 1 includes an antenna for performing non-contact communication with a reader/writer (data reading/writing unit) of a host device, and an IC chip which includes an IC that can execute prescribed processing, within a thin card case (cf. FIG. 3). The non-contact type IC card 1 can thereby perform radio communication with a reader/writer of a host device in a non-contact manner. It is thereby possible to read or write data in the non-contact type IC card 1 simply by locating the non-contact type IC card 1 within an effective area of an electromagnetic wave emitted from a reader/writer (or, simply by holding the non-contact type IC card 1 over a reader/writer). Thus, the non-contact type IC card 1 has the advantages that it is easy to use because there is no need to insert/remove the card to/from a reader/writer, it can transmit and receive data quickly, it is not easy to modify or alter to provide high security, and it is reusable by rewriting data, thereby offering convenience to users.

Because of such convenience, the non-contact type IC card 1 is widely applied to IC card systems which provide various kinds of services. For example, the non-contact type IC card 1 is applied to an electronic money system, a transportation ticket gate system, an expressway toll collection system, an electronic settlement system, a security system for entry to a building or a room or login to a personal computer (PC), and so on. The non-contact type IC card 1 may be applied to the following uses (1) to (6), for example:
(1) an electronic money card which stores currency data of electronic money;
(2) a transportation card which stores data of a commuter pass, a reserved seat ticket, a prepaid fare or the like of transportation such as a train, a bus and an expressway;
(3) a personal authentication card which can serve as an identification card such as an employee identification card and a student identification card that is used for identification and attendance management or as a key for entry to and exit from a building;
(4) a membership card, a point card or a coupon card of stores or facilities;
(5) an electronic ticket card which stores electronic ticket data of a theater, a concert hall, a stadium, an amusement facility or the like; and
(6) an electronic settlement card which is used for electronic commerce such as internet shopping, video or music contents delivery, and trading of financial products such as a stock and a deposit.

Further, a multi-application type card which has the multiple functions in one non-contact type IC card 1 has been developed, and the non-contact type IC card 1 is becoming increasingly diversified.

This embodiment is intended for the non-contact type IC card 1 which can store electronic value as service data, such as an electronic money card, a transportation ticket card, an electronic ticket card and an electronic settlement card. The electronic value is data which has a currency value or a value that is equivalent to currency, and it includes prepaid electronic money, a prepaid transportation fee, a point or a coupon given upon product purchase at a store or the like, for example.

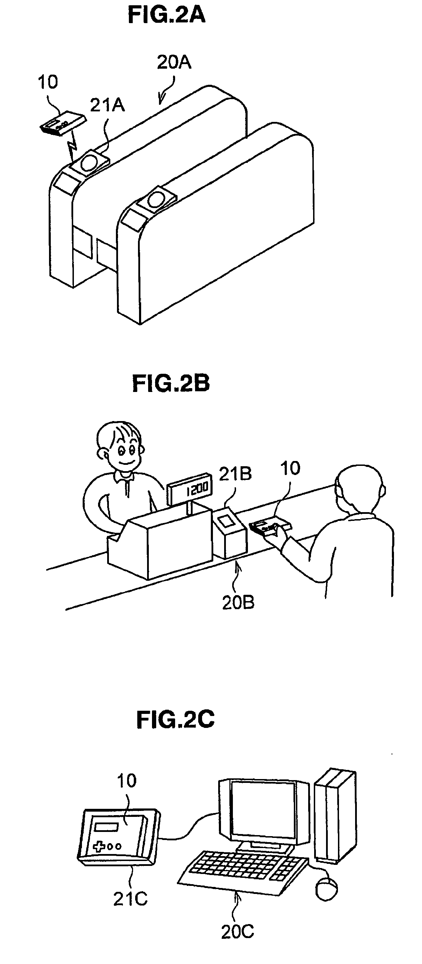

The electronic wallet device 10 according to this embodiment has a structure that is capable of holding a plurality of various non-contact type IC cards 1. A user can thereby carry a plurality of non-contact type IC cards 1 collectively by holding them in the electronic wallet device 10. Further, at the time of communication with a reader/writer of a host device, the electronic wallet device 10 can automatically select a card that is appropriate for use in the communication with the reader/writer of the host device from the plurality of non-contact type IC cards 1 in accordance with a service provided by the host device. Thus, when using a card, a user simply holds the electronic wallet device 10 which contains the plurality of non-contact type IC cards 1 over a reader/writer 21 of the host device as shown in FIG. 2, and the electronic wallet device 10 automatically selects an appropriate non-contact type card 1 to thereby establish communication with the reader/writer 21. The user can thereby receive a desired service using the non-contact type IC card 1 without taking out the relevant non-contact type IC card 1 from the electronic wallet device 10.

For example, as shown in FIG. 2A, at a transportation ticket gate, a user holds the electronic wallet device 10 which contains a plurality of non-contact type IC cards 1 over a reader/writer 21 A of an automatic transportation ticket gate 20A. Then, an appropriate transportation card is selected from the plurality of non-contact type IC cards 1 which are contained in the electronic wallet device 10, and information about payment of a transportation fee is exchanged between the selected transportation card and the reader/writer 21A.

For another example, as shown in FIG. 2B, at a store such as a convenience store or a department store, a user holds the electronic wallet device 10 over a reader/writer 21B of a cash register device 20B. Then, an appropriate electronic money card is selected from the plurality of non-contact type IC cards 1 which are contained in the electronic wallet device 10, and information about payment of a product fee is exchanged between the selected electronic money card and the reader/writer 21B.

For yet another example, as shown in FIG. 2C, in electronic commerce using a user terminal 20C (e.g. a personal computer) which is connected to the internet or the like, a user holds the electronic wallet device 10 over a reader/writer 21C of the user terminal 20C. Then, an appropriate electronic settlement card is selected from the plurality of non-contact type IC cards 1 which are contained in the electronic wallet device 10, and information about electronic commerce is exchanged between the selected electronic settlement card and the reader/writer 21C.

As described above, if the electronic wallet device 10 according to this embodiment is located within a communication area of the reader/writer 21 of the host device 20, the non-contact type IC card 1 which corresponds to the service that is provided by the host device 20 is automatically selected, and information concerning a desired service is exchanged between the selected non-contact type IC card 1 and the host device 10. In FIG. 2, host devices such as the automatic transportation ticket gate 20A, the cash register device 20B and the user terminal 20C are illustrated as external units to be communicated with the electronic wallet device 10. Besides those devices, other arbitrary external units which are capable of non-contact communication with the non-contact type IC card 1, such as an automatic vending machine of products or tickets, a points of sale (POS) terminal, a kiosk terminal, and an automatic teller machine (ATM) of a financial institution, may be used.

The configuration of an IC card system which uses the above-described electronic wallet device 10 is described hereinafter in detail.

Referring first to FIG. 3, an example of the configuration of the IC card system according to the embodiment of the present invention is described. FIG. 3 is a block diagram showing an example of the configuration of a host device 20 and a non-contact type IC card 1 in the IC card system according to the embodiment.

As shown in FIG. 3, in the IC card system, the reader/writer 21 of the host device 20 transmits power to the non-contact type IC card 1 by generating a radio frequency (RF) operating magnetic field and further modulates the RF operating magnetic field according to a command or data. Non-contact communication is thereby performed between the reader/writer 21 and the non-contact type IC card 1. The communication may be "symmetric transmission" that does not use a subcarrier, which is performed at a transmission speed of 212 kbps with the use of a 13.56 MHz frequency band, for example. An amplitude shift keying (ASK) modulation may be used as a modulating method, and Manchester encoding may be used as an encoding method. Although a time slot method may be used as a method of detecting and avoiding data collision (anti-collision), for example, the IC card system does not necessarily support the anti-collision function. The IC card system repeats transactions in such a way that the reader/writer 21 of the host device 20 issues various kinds of commands to the non-contact type IC card 1, and the non-contact type IC card 1 responds to those commands, thereby performing communication regarding a prescribed service.

The configuration of the host device 20 is described below. The host device 20 includes a control section 22, a communication section 23, an antenna 24, a storing section 25, an operating section 26, an external interface 27 and so on. The control section 22, the communication section 23, the antenna 24 and so on constitute the reader/writer 21.

The control section 22 is configured of a micro-processor or the like, and it controls each section of the host device 20 and performs prescribed processing. The control section 22 operates according to a program which is stored in the storing section 25, and executes possessing concerning a prescribed service, generation of commands and control of transmission and reception of information, for example. The reader/writer 21 can thereby perform card detection (polling), mutual authentication, data reading and writing and so on for the non-contact type IC card 1.

The communication section 23 performs non-contact communication with the non-contact type IC card 1 using the antenna 24 according to a direction from the control section 22. Specifically, the communication section 23 generates an RF operating magnetic field using the antenna 24 and transmits power to the non-contact type IC card 1 through the RF operating magnetic field, and further modulates the RF operating magnetic field according to a command or data concerning a prescribed service and transmits the command or data to the non-contact type IC card 1. Further, the communication section 23 demodulates the RF operating magnetic field which is transmitted from the non-contact type IC card 1, obtains a command or data that is sent from the non-contact type IC card 1, and outputs them to the control section 22.

The antenna 24 is an antenna to communicate with the non-contact type IC card 1, and it is configured of a coil antenna, for example. The antenna 24 is connected with the communication section 23.

The storing section 25 is configured of a storage device such as a read only memory (ROM), a random access memory (RAM) or a hard disk drive, and it and stores information permanently or temporarily. The storing section 25 stores various kinds of data such as a program for causing the control section 22 to operate so as to provide a prescribed service by non-contact communication, a code (a service code, a system code etc.) that represents a service to which the reader/writer 21 corresponds, data that is acquired from the non-contact type IC card 1, data that is processed by the control section 22, and data that is input from the operating section 26 or the external interface 27, for example.

The operating section 26 is configured of an input device such as operation key, for example, and a user can operate the host device 20 using the operating section 26. If the host device 20 includes a display device such as a display, though not shown, a user can check the information which is displayed on the display device. The external interface 27 is a device for exchanging information with an external device (not shown) which is connected to the host device 20 through a network.

The configuration of the non-contact type IC card 1 is described hereinbelow. The non-contact type IC card 1 includes a control section 12, a communication section 13, an antenna 14, a storing section 15 and so on. The control section 12, the communication section 13 and the storing section 15 are mounted on a small IC chip. The antenna 14 is configured of a coil antenna which is located along the periphery of the non-contact type IC card 1 or the like, and it is connected with the communication section 13.

The control section 12 is configured of a micro-processor or the like, and it controls each section of the non-contact type IC card 1 and performs prescribed processing. The control section 12 operates according to a program such as an application program which is stored in the storing section 15, and executes prescribed processing, generation of commands, control of transmission and reception of information and so on. For example, when the control section 12 communicates with the reader/writer 21 concerning a prescribed service, the control section 12 can read or write data concerning the service (service data) from or to the storing section 15.

The communication section 13 performs non-contact communication with the reader/writer 21 of the host device 20 using the antenna 14 according to a direction from the control section 12. Specifically, the communication section 13 is configured of a front-end circuit, a power reproduction circuit or the like, which is not shown, and it supplies power and data obtained from the reader/writer 21 to the control section 12. The power reproduction circuit generates an induced electromotive force from the RF operating magnetic field of a carrier wave which is generated by the reader/writer 21 and takes it in as power of the non-contact type IC card 1, using the antenna 14. The induced electromotive force is used as a power source to drive each element of the non-contact type IC card 1. The front-end circuit receives the carrier wave which is emitted from the reader/writer 21 using the antenna 14, acquires a command or data from the reader/writer 21 by demodulating the carrier wave, and supplies the command or data to the control section 12. Further, the communication section 13 reproduces a clock for driving the non-contact type IC card 1 by dividing the frequency of the carrier wave. Furthermore, the communication section 13 modulates the carrier wave according to the command or data concerning a prescribed service which is generated by the control section 12 and transmits the modulated carrier wave to the reader/writer 21 using the antenna 14.

The storing section 15 is configured of a memory such as ROM or RAM and stores various kinds of information. For example, the storing section 15 may be configured of a nonvolatile memory such as an electrically erasable and programmable ROM (EEPROM), a flash memory or a ferroelectric RAM (FeRAM). The storing section 15 stores various kinds of data such as an application program to cause the control section 12 to operate so as to provide a prescribed service by non-contact communication, a card ID to uniquely identify the non-contact type IC card 1, a code (a service code, a system code etc.) that represents a service to which the non-contact type IC card 1 corresponds, and service data (electronic value etc.), for example.

If the non-contact type IC card 1 is a multi-application card which corresponds to a plurality of services, the storing section 15 stores a plurality of kinds of codes, application programs, service data and so on which correspond to the respective services.

In such a configuration, the reader/writer 21 of the host device 20 and the non-contact type IC card 1 perform non-contact communication, thereby providing services using the non-contact type IC card 1 to a user. For example, if the non-contact type IC card 1 corresponds to an electronic money service, it is possible to pay a purchase price of a product or the like to the host device 20 by using the electronic value stored in the non-contact type IC card 1 as electronic money. Because the non-contact type IC card 1 is anonymous, information about a payer is not exchanged between the reader/writer 21 and the non-contact type IC card 1, so that the payer is not identifiable.

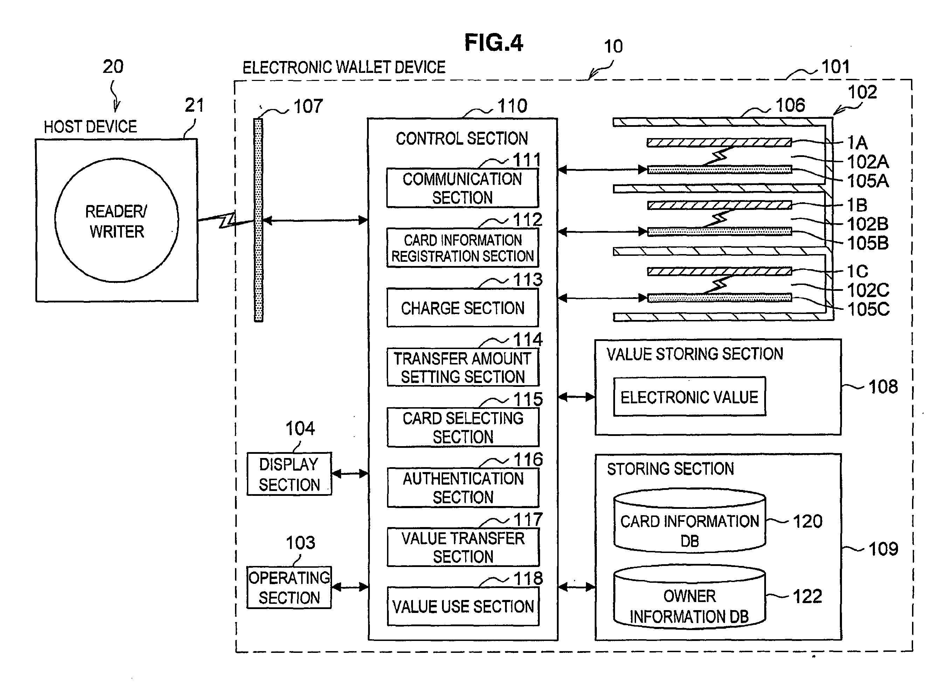

Although the non-contact type IC card 1 is capable of performing non-contact communication directly with the reader/writer 21 as shown in FIG. 3, it can communicate with the reader/writer 21 indirectly through the electronic wallet device 10 in the state that the non-contact type IC card 1 is contained in the electronic wallet device 10. In other words, the electronic wallet device 10 has a function to mediate non-contact communication between a plurality of non-contact type IC cards 1 and the reader/writer 21. The electronic wallet device 10 and the non-contact type IC card 1 which is contained inside the electronic wallet device 10 can perform non-contact communication on the same principle as the case of the reader/writer 21 and the non-contact type IC card 1 shown in FIG. 3 (cf. FIG. 4).

Referring then to FIG. 4, the configuration of the electronic wallet device 10 according to the embodiment of the present invention is described hereinafter. FIG. 4 is a block diagram showing the schematic configuration of the electronic wallet device 10 according to this embodiment.

As shown in FIG. 4, the electronic wallet device 10 mainly includes a casing 101, a holding section 102, an operating section 103, a display section 104, card communication antennas 105A to 105C, a shield 106, an external communication antenna 107, a value storing section 108, a storing section 109, and a control section 110.

The casing 101 of the electronic wallet device 10 includes the holding section 102 to hold a plurality of non-contact type IC cards 1. The holding section 102 is composed of the above-described plurality of slots 102A to 102C (cf. FIG. 1), for example, and stably holds the plurality of (e.g. three in the example FIG. 4) non-contact type IC cards 1A to 1C which are inserted through card insertion openings of the casing 101. The holding section 102 is sectionalized into holding areas (i.e. the slots 102A to 102C) which correspond to each non-contact type IC card 1, and the holding areas respectively include the card communication antennas 105A to 105C (which are also referred to collectively as the card communication antennas 105).

The card communication antenna 105 is an antenna for performing non-contact communication with each non-contact type IC card 1 which is held in the holding section 102. The card communication antenna 105 is configured of a coil antenna, for example, and it is connected to the control section 110. A plurality of card communication antennas 105 are placed corresponding one-to-one to each non-contact type IC card 1 which is held in the holding section 102, and they are positioned opposite to each non-contact type IC card 1. Thus, each card communication antenna 105 can individually perform non-contact communication with each non-contact type IC card 1 which is held in the holding section 102. Further, the card communication antennas 105 are connected to the external communication antenna 107 via the control section 110, so that they can exchange data to be read from or written to the storing section 15 in the non-contact type IC card 1 with the reader/writer 21.

Further, the holding section 102 has the shield 106 so as to separate the plurality of non-contact type IC cards 1 which are held therein from each other. The shield 106 is made of a material which shields an electromagnetic wave and has a shape that individually surrounds each non-contact type IC card 1 held in the holding section 102. The shield 106 electromagnetically isolates the plurality of non-contact type IC cards 1 in the holding section 102 from each other, thereby avoiding mutual interference. It is thereby possible to prevent the antenna coils of the adjacent non-contact type IC cards 1 from magnetically coupling with each other so as to eliminate an influence caused by electromagnetic induction of another non-contact type IC card 1 or the like. Therefore, one non-contact type IC card 1 which is selected from a plurality of non-contact type IC cards 1 in the holding section 102 can suitably communicate with the reader/writer 21 without being interfered by the other non-contact type IC cards 1.

As described above, the holding section 102 includes a plurality of card communication antennas 105 which respectively correspond to a plurality of non-contact type IC cards 1 and the shield 106 which electromagnetically isolates the plurality of non-contact type IC cards 1 from each other. Therefore, even when a plurality of non-contact type IC cards 1 which do not support the anti-collision function (the function of detecting and avoiding data collision) are held in the holding section 102, each non-contact type IC card 1 can perform communication individually. However, embodiments of the present invention are not limited to such an example, and in the case of holding only the non-contact type IC cards 1 which support the anti-collision function, the shield 106 may be eliminated, and the holding section 102 may include a single card communication antenna 105 which is commonly used for all the non-contact type IC cards 1.

The operating section 103 is configured of an operating key such as a button, a lever and a touch panel, for example. A user can direct the operation of the electronic wallet device 10 or input data by operating the operating section 103. For example, by operating the operating section 103, a user can direct the transfer of electronic value between the value storing section 108 and the non-contact type IC card 1 or indicate a transfer source/destination of the non-contact type IC card 1 or a transfer amount.

The display section 104 is configured of a display device such as a liquid crystal display device. The display section 104 displays various kinds of information concerning services using the non-contact type IC cards 1. For example, the display section 104 can display a type of the non-contact type IC card 1 which is held in the holding section 102, card inside information such as service data that is stored in the cards 1 (e.g. a balance of electronic value), and so on.

The external communication antenna 107 is an antenna by which the electronic wallet device 10 performs non-contact communication with an external unit such as the reader/writer 21 of the host device 20, and it is configured of a coil antenna, for example. The external communication antenna 107 is connected to the control section 110. The external communication antenna 107 receives a carrier wave which is transmitted from the reader/writer 21 and outputs a signal corresponding to the carrier wave to the control section 110. Further, the external communication antenna 107 transmits a carrier wave corresponding to a signal which is output from the control section 110 to the reader/writer 21.

The value storing section 108 is configured of a nonvolatile memory such as EEPROM, a flash memory or FeRAM, for example. The value storing section 108 stores electronic value which can be commonly used for each service. For example, the value storing section 108 stores electronic value which is charged from the reader/writer 21 of the host device 20 to the electronic wallet device 10, electronic value which is transferred from the non-contact type IC card 1 and so on.

Common electronic value which is stored in the value storing section 108 is described hereinbelow. Electronic value which is used for an existing electronic money service is available for only the non-contact type IC card 1 which corresponds to a relevant electronic money service, and there is no compatibility of electronic value among different services. For example, electronic value which is used for a non-contact type IC card 1 A that corresponds to an electronic money service A has not been available for another non-contact type IC card 1B that corresponds to another electronic money service B. Therefore, it has not been unable to exchange or combine electronic value of electronic money among a plurality of non-contact type IC cards 1 which correspond to different electronic money services (which are hereinafter referred to as different kinds of non-contact type IC cards 1). Accordingly, it is necessary for a user who owns a plurality of non-contact type IC cards 1 to use different non-contact type IC cards for different services, which is inconvenient.

On the other hand, electronic value which is stored in the value storing section 108 according to this embodiment can be commonly used for a plurality of services (e.g. a plurality of electronic money services). Such common electronic value can be transferred and combined not only between a plurality of non-contact type IC cards 1 which correspond to the same kind of services, but also between a plurality of non-contact type IC cards 1 which correspond to different kinds of services. Thus, the value storing section 108 functions as a cache for various kinds of electronic value which are stored in a plurality of non-contact type IC cards 1. Because the electronic wallet device 10 includes the value storing section 108 having such a function, it can flexibly cope with a plurality of non-contact type IC cards 1 which correspond to the same kind or different kinds of services.

The storing section 109 is configured of a semiconductor memory such as ROM or RAM, for example, and stores various kinds of information. For example, the storing section 109 stores various kinds of program for causing the control section 110 to operate and various kinds of data such as data which is acquired from the reader/writer 21 during communication between the reader/writer 21 and the non-contact type IC card 1 and data which is processed by the control section 110.

Further, the storing section 109 stores a card information database 120 which contains information that is stored in a plurality of non-contact type IC cards 1 which are held in the holding section 102 (which is hereinafter referred to as the card inside information). The card inside information may be information which represents a card ID that is stored in the storing section 15 of each non-contact type IC card 1, a code of a service to which the non-contact type IC card 1 correspond (e.g. a service code, a system code etc.), service data that includes electronic value and so on. The control section 110 can select the non-contact type IC card 1 to be used for communication with the reader/writer 21 based on the card inside information in the card information database 120.

The storing section 109 further stores an owner information database 122 which contains owner information of the electronic wallet device 10. For example, the owner information is personal information for identifying a rightful owner of the electronic wallet device 10, and it may be a name, an address, an age, a telephone number, an e-mail address, a user ID or the like of the owner. The owner information includes authentication information that is necessary for performing identity authentication of an owner, which is described later. For example, the authentication information may be a password that is set by an owner, biometric information (information such as fingerprint, iris or vein) of an owner for biometric authentication, or the like. The owner information database 122 may be set and registered by an owner directly inputting information to the electronic wallet device 10 or may be registered by an external device that is connected to the electronic wallet device 10.

The control section 110 is configured of a micro processor which is mounted on an IC chip, for example. The control section 110 controls each section of the electronic wallet device 10 and performs prescribed processing. The control section 110 operates according to a program which is stored in the storing section 109 and executes processing concerning a prescribed service, generation of commands, control of transmission and reception of various kinds of information and so on. The electronic wallet device 10 can thereby perform transaction processing for the non-contact type IC card 1 such as card detection (polling), mutual authentication and data reading and writing with the reader/writer 21.

Further, the control section 110 serves as a communication section 111, a card information registration section 112, a charge section 113, a transfer amount setting section 114, a card selecting section 115, an authentication section 116, a value transfer section 117, and a value use section 118. Those functional sections are described hereinbelow.

The communication section 111 communicates data with the reader/writer 21 of the host device 20 via the external communication antenna 107 and also communicates data with each non-contact type IC card 1 via the card communication antenna 105. The communication section 111 allows various kinds of commands and data to be exchanged between the host device 20 and the electronic wallet device 10 and between the electronic wallet device 10 and the non-contact type IC card 1.

The communication section 111 receives a transaction request for a service which is provided by the host device 20 from the reader/writer 21 of the host device 20. The transaction request is, for example, a request for payment of a prescribed amount of electronic value in an electronic money service or an electronic settlement service, a request for payment of a prescribed amount of transportation fee in a transportation service, a request for addition, deletion, or update of a point or a coupon in a point/coupon card system.

Further, the communication section 111 can communicably connect the non-contact type IC card 1 which is selected by the card selecting section 113, which is described later, and the reader/writer 21 of the host device 20 via the card communication antenna 105 and the external communication antenna 107. Therefore, when the electronic wallet device 10 is held over the reader/writer 21, the non-contact type IC card 1 in the electronic wallet device 10 can exchange commands or data concerning a prescribed service with the reader/writer 21, just like when the non-contact type IC card 1 by itself is held over the reader/writer 21.

The card information registration section 112 recognizes the non-contact type IC card 1 which is held in the holding section 102 and registers the card inside information which is stored in the non-contact type IC card 1 onto the card information database 120. Specifically, the card information registration section 112 recognizes whether the non-contact type IC card 1 is held in each slot 102A to 102C by detecting the insertion of the non-contact type IC cards 1A to 1C into the respective slots 102A to 102C or the removal of the non-contact type IC cards 1A to 1C from the respective slots 102A to 102C. Further, the card information registration section 112 determines the kind of the non-contact type IC card 1 which is held in each of the slots 102A to 102C by reading out identification information such as a code (e.g. a service code, a system code etc.) or a card ID from the non-contact type IC card 1 which is held in the slots 102A to 102C. The code is information which represents the kind of a service to which the non-contact type IC card 1 corresponds, which is, the kind of the non-contact type IC card 1. The card information registration section 112 can determine whether a plurality of non-contact type IC cards 1 are the same kind of cards or different kinds of cards based on the code which is stored in each non-contact type IC card 1.

Further, the card information registration section 112 registers or updates the card inside information which is stored in the non-contact type IC card 1 that is held in the holding section 102 onto the card information database 120 of the storing section 109. The card information registration section 112 may execute the registration/update operation triggered by the insertion/removal of the non-contact type IC cards 1 to/from the holding section 102, or may execute the registration/update operation regularly after holding each card. Specifically, when the non-contact type IC card 1 is inserted into the holding section 102, for example, the card information registration section 112 reads out the card inside information which is stored in the storing section 15 of the non-contact type IC card 1 that is held in the holding section 102 and registers the card inside information onto the card information database 120. Further, when the non-contact type IC card 1 is removed from the holding section 102, for example, the card information registration section 112 deletes the card inside information of the non-contact type IC card 1 from the card information database 120. Furthermore, when the non-contact type IC card 1 is used and the service data in this card is changed, for example, the card information registration section 112 updates the information which represents the service data of the relevant non-contact type IC card 1 in the card information database 120.

The charge section 113 charges (deposits) the value storing section 108 of the electronic wallet device 10 with a prescribed amount of electronic value by communicating with the reader/writer 21 of the host device 20 via the external communication antenna 107 using the communication section 111. For example, the user holds the electronic wallet device 10 over the reader/writer 21 and directs charge of a prescribed amount to the host device 20. Then, the charge section 113 exchanges commands and data concerning the charge of electronic value with the reader/writer 21 of the host device 20, thereby charging the value storing section 108 with the amount of electronic value which is directed by the host device 20. The charge amount may be an arbitrary amount that is selected by a user or a prescribed amount that is automatically selected. A device which charges the electronic wallet device 10 may be a charging device different from the above-mentioned host device 20 (such as an automatic transportation ticket machine).

In this way, electronic value with which the electronic wallet device 10 is charged is stored in the value storing section 108 inside the non-anonymous electronic wallet device 10 rather than in the anonymous non-contact type IC card 1. Thus, the charged amount of electronic value is stored in the secure electronic wallet device 10 until the electronic value is used after charging. When the electronic wallet device 10 is charged with cash by a user, there is no particular need to perform identity authentication. On the other hand, when the electronic wallet device 10 is charged using a bank account, a credit card or the like of a user, it is possible to verify that the user is a rightful owner of the bank account, the credit card or the like by the operation of the authentication section 116 and so on, which is described later. In this light also, the electronic wallet device 10 is a highly secure non-anonymous device.

The transfer amount setting section 114 sets a transfer amount of electronic value to be transferred from the value storing section 108 of the electronic wallet device 10 to the non-contact type IC card 1 and stores the set value into the storing section 109. The transfer amount setting section 114 may set a transfer amount based on a user input, for example. Specifically, the transfer amount setting section 114 may set the transfer amount to an arbitrary value that is directed by a user or a value that is selected by a user from a plurality of choices of transfer amount (e.g. 1000 points and 10000 points). This enables transfer of the amount of electronic value which is desired by a user. Alternatively, the transfer amount setting section 114 may set the transfer amount to a prescribed amount (e.g. 1000 points). This saves a user from inputting a transfer amount. In this manner, a transfer amount is previously set by the transfer amount setting section 114 and stored into the storing section 109, so that the value transfer section 117, which is described later, can transfer the set transfer amount from the value storing section 108 to the non-contact type IC card 1 in response to a transfer direction from a user.

The card selecting section 115 selects the card to be used for communication with the reader/writer 21 from a plurality of non-contact type IC cards 1 which are held in the holding section 102 according to a communication request from the reader/writer 21 of the host device 20. In the IC card system, the service which is implemented by non-contact communication between the reader/writer 21 and the non-contact type IC card 1 can be specified by a code that is included in the communication request from the host device 20 (e.g. a system code or a service code representing a service provided by the host device 20). At an early stage of non-contact communication, the reader/writer 21 transmits a communication request (request command) which includes the pertinent code and detects whether the non-contact type IC card 1 which corresponds to the service exists within a communication area of the reader/writer 21 (which is called polling). The card selecting section 115 selects the non-contact type IC card 1 which is appropriate for the code that is included in the communication request from the reader/writer 21 based on the code of each non-contact type IC card 1 which is registered in the card information database 120, for example.

Specifically, at the start of communication between the host device 20 and the electronic wallet device 10, the communication section 111 of the electronic wallet device 10 receives a communication request which includes a code representing a prescribed service to which the host device 20 corresponds from the reader/writer 21 of the host device 20 via the external communication antenna 107. Then, the card selecting section 115 reads out the code of the service to which the non-contact type IC card held in the holding section 102 corresponds from the card information database 120 of the storing section 109 and checks the received code against the read-out code to thereby specify the non-contact type IC card 1 which corresponds to the service for which the communication request is made by the reader/writer 21. Accordingly, the card selecting section 115 can select the non-contact type IC card 1 which can be used for the service for which the communication request is made from a plurality of non-contact type IC cards 1 that are held in the holding section 102.

The authentication section 116 performs identity authentication of an owner of the electronic wallet device 10 based on the owner information database 122 which is stored in the storing section 109. The identity authentication is performed in order to verify whether a user who is operating the electronic wallet device 10 is a rightful owner of the electronic wallet device 10 at the time of payment of electronic money or the like. The identity authentication may involve password authentication, biometric authentication, authentication with a physical key and so on.

In the password authentication, the authentication section 116 checks a password which is previously registered onto the owner information database 122 against a password which is input by a person to be authorized, and if the both match, authentication is determined to be successful. In the biometric authentication, the authentication section 116 checks biometric information (such as fingerprint, iris or vein) of a rightful owner which is previously registered onto the owner information database 122 against biometric information of a person to be authorized which is detected by a biometric authentication sensor (not shown) that is included in the electronic wallet device 10, and if the both match, authentication is determined to be successful. In the authentication with a physical key capable of non-contact communication with the electronic wallet device 10, the authentication section 116 determines whether a key that is held by a user is within a prescribed distance from the electronic wallet device 10, and if it determines that the key is within the prescribed distance, authentication is determined to be successful.

With such identity authentication performed by the authentication section 116, it is possible to verify that a holder of the electronic wallet device 10 is a rightful owner of the electronic wallet device 10. Therefore, by carrying out the identity authentication when performing processing of transferring electronic value from the value storing section 108 to the non-contact type IC card 1 by means of the value transfer section 117, processing of directly using electronic value from the electronic wallet device 10 to the host device 20 by means of the value use section 118 and so on, it is possible to prevent the unauthorized use of electronic value in the electronic wallet device 10. With such an identity authentication function, the electronic wallet device 10 serves as a non-anonymous device which is capable of performing identity authentication at the time of using electronic value, thereby ensuring security.

The value transfer section 117 transfers electronic value between the value storing section 108 of the electronic wallet device 10 and the non-contact type IC card 1 held in the holding section 102. Specifically, the value transfer section 117 can transfer the electronic value which is stored in the non-contact type IC card 1 to the value storing section 108, and reversely, transfer the electronic value which is stored in the value storing section 108 to the non-contact type IC card 1. The transfer of electronic value means to reduce at least part of the amount of electronic value stored in one storing medium and increase the amount of electronic value stored in another storing medium by the reduced amount of the electronic value.

As described above, the electronic value which is charged in the electronic wallet device 10 is basically stored in the value storing section 108 of the electronic wallet device 10, not in the non-contact type IC card 1. Therefore, in order to use the electronic value as electronic money or the like using the non-contact type IC card 1, it is necessary to transfer the electronic value stored in the value storing section 108 to the storing section 15 of the non-contact type IC card 1. Thus, when the electronic wallet device 10 receives a transaction request of electronic value (such as a request for payment of a prescribed amount of electronic money) from the host device 20 or when transfer of electronic value is directed by a user, for example, the value transfer section 117 transfers the electronic value which is stored in the value storing section 108 to the non-contact type IC card 1. The non-contact type IC card 1 is thereby charged with the transferred amount of electronic value, so that the electronic value can be used with the non-contact type IC card 1.

The transfer amount is described hereinafter. When a transaction request from the host device 20 is received, the value transfer section 117 automatically transfers the amount of electronic value which is designated by the transaction request (automatic transfer processing). For example, in the case where a payment request of electronic money of 1000 points for a certain electronic money service A is received, the value transfer section 117 transfers 1000 points of electronic value from the value storing section 108 to the non-contact type IC card 1A which corresponds to the service A. The non-contact type IC card 1A can thereby make payment to the host device 20 by using the transferred 1000 points of electronic value as electronic money. In this manner, by transferring the amount of electronic value which is necessary for a transaction in response to a transaction request from the host device 20, it is possible to prevent transfer of an excessive amount of electronic value to the anonymous non-contact type IC card 1, thereby ensuring security. The non-contact type IC card 1A as a transfer destination when receiving a transaction request from the host device 20 may be selected automatically by the card selecting section 115.

On the other hand, when transfer of electronic value is directed by a user, the value transfer section 117 transfers the amount of electronic value which is set by the card selecting section 115 described above (manual transfer processing). For example, in the case where transfer of 10000 points is directed by a user, the value transfer section 117 transfers 10000 points of electronic value which is stored in the value storing section 108 to the non-contact type IC card 1 which is specified by a user. The amount of electronic value which is desired by a user is thereby transferred to the non-contact type IC card 1 specified by a user, which increases convenience for a user.

Further, the value transfer section 117 transfers electronic value from the value storing section 108 to the non-contact type IC card 1 on condition that authentication by the authentication section 116 is successful. Because the electronic money card A is anonymous as described above, once electronic value is transferred to the non-contact type IC card 1, anyone can freely use the electronic value with the non-contact type IC card 1. For example, if an unrightful person who has found the lost electronic wallet device 10 can transfer a large amount of electronic value which is stored in the value storing section 108 to the non-contact type IC card 1, the person can freely use the anonymous electronic money using the non-contact type IC card 1 without being identified. It is thus not preferable to allow anyone to freely transfer electronic value from the value storing section 108 to the non-contact type IC card on security grounds. In light of this, the electronic wallet device 10 according to this embodiment enables transfer of electronic value on condition of success of the above-descried identity authentication. This prohibits the unauthorized use as described above and allows only a rightful owner to transfer electronic value, thereby ensuring security of the electronic wallet device 10 against loss or theft.

As described above, in the electronic wallet device 10 according to this embodiment, identity authentication of an owner of the electronic wallet device 10 is performed by the authentication section 116 when transferring electronic value from the value storing section 108 to the non-contact type IC card 1. On the other hand, when performing electronic value transaction (such as payment of electronic money) between the host device 20 and the non-contact type IC card 1 via the electronic wallet device 10 after transferring electronic value to the non-contact type IC card 1, identity authentication of an owner of the electronic wallet device 10 by the authentication section 116 is not performed. This is for the purpose of maintaining a clear distinction between the role of the non-anonymous electronic wallet device 10 and the anonymous non-contact type IC card 1. If identity authentication is performed at the time of a transaction using the non-contact type IC card 1 as well, the anonymity of electronic money is lost, which causes inconveniences such as that use of electronic money is known to others. Thus, user identity authentication is not carried out at the use of electronic value with the non-contact type IC card 1, so that the advantage of anonymity of electronic money is maintained.

If a transfer amount of electronic value from the value storing section 108 to the non-contact type IC card 1 is smaller than a prescribed amount (e.g. less than 1000 points), identity authentication may be bypassed. This saves a rightful owner from identity authentication by placing a greater importance on convenience of an owner than on safety of a small amount of electronic value.

Further, the value transfer section 117 can retrieve the electronic value which remains in the non-contact type IC card 1 to the value storing section 108 by transferring the electronic value from the non-contact type IC card 1 to the value storing section 108. For example, if the amount of electronic value which is transferred from the value storing section 108 to the non-contact type IC card 1 (e.g. 5000 points) is larger than the amount of payment in a transaction between the host device 20 and the non-contact type IC card 1 (e.g. 3000 points), a residual electronic value remains in the non-contact type IC card 1. Thus, the value transfer section 117 returns the remaining electronic value in the non-contact type IC card 1 to the value storing section 108 after completion of the transaction, which improves security.

In this case also, if the amount of electronic value which remains in the non-contact type IC card 1 is smaller than a prescribed amount (e.g. less than 1000 points), the value storing section 108 may not return the remaining electronic value to the value storing section 108. This places a greater importance on convenience of an owner than on safety of a small amount of electronic value.

Furthermore, when the non-contact type IC card 1 is inserted into the slot 102A of the holding section 102 of the electronic wallet device 10, the value transfer section 117 takes out the electronic value in the non-contact type IC card 1 and transfers it to the value storing section 108 automatically or in response to a direction from a user. This passes on the electronic value from the non-contact type IC card 1 to the value storing section 108 so as to keep the electronic value in the non-anonymous electronic wallet device 10 which is safer than the anonymous non-contact type IC card 1. The security against loss or theft is thereby increased compared with the case of keeping the value charged in the non-contact type IC card 1.

The value use section 118 uses the electronic value which is stored in the value storing section 108 of the electronic wallet device 10 or the electronic value in the non-contact type IC card 1 to conduct a transaction for a prescribed service with the host device 20.

The case where the electronic wallet device 10 and the host device 20 directly conduct a transaction with each other using electronic value which is stored in the value storing section 108 of the electronic wallet device 10 is described firstly. The electronic wallet device 10 can perform a transaction directly with the host device 20 without the intermediary of the non-contact type IC card 1 with use of electronic value stored in the value storing section 108. In such a case, the value use section 118 can execute transaction processing using the electronic value stored in the value storing section 108 by exchanging commands and data regarding the electronic value transaction with the host device 20 using the communication section 111. For example, when a payment request for a prescribed amount of electronic value is transmitted from the host device 20, the value use section 118 makes payment of the prescribed amount of electronic value which is specified by the payment request using the electronic value stored in the value storing section 108.

In this manner, when performing a direct transaction from the electronic wallet device 10 to the host device 20, the electronic value which is stored in the value storing section 108 is used on condition that authentication by the authentication section 116 is successful or that owner information of the electronic wallet device 10 is transmitted to the host device 20. It is thereby possible to prevent unauthorized use of the electronic value in the electronic wallet device 10 at the event of loss of the electronic wallet device 10 or the like and ensure the security of the non-anonymous electronic wallet device 10. When authentication by the authentication section 116 is successful, for example, it means that a holder of the electronic wallet device 10 is a rightful owner, and there is no problem in using the electronic value in the value storing section 108 freely according to a direction from the owner.

Further, if, at the use of the electronic value in the value storing section 108, information of the owner information database 122 which is stored in the storing section 109 of the electronic wallet device 10 is transmitted to the host device 20, the host device 20 can identify the electronic wallet device 10 based on the owner information and prohibit (lock out) the use of the electronic wallet device 10 thereafter. For example, if a rightful owner notifies an administrator of the IC card system when the electronic wallet device 10 is lost or thieved, the IC card system issues a direction to prohibit the use of the pertinent electronic wallet device 10 to each host device 20. Thus, when an unrightful person who has found or thieved the electronic wallet device 10 tries to use the electronic value in the electronic wallet device 10 to the host device 20 after that, the person fails to use the electronic wallet device 10 because the electronic wallet device 10 is locked by the host device 20.

Further, with use of a physical key described above, if a rightful owner who has the key is away from the electronic wallet device 10 by a prescribed distance or longer, the electronic wallet device 10 may be automatically locked to disable the use of the electronic value in the electronic wallet device 10. This also increases the security of the electronic wallet device 10 against loss or theft.

The case of using electronic value with the non-contact type IC card 1 is described hereinafter. In such a case, the value use section 118 makes control so as to execute a transaction between the host device 20 and the non-contact type IC card 1 in response to the above-described transaction request. For example, when receiving a request for payment of the prescribed amount of electronic value from the host device 20, the value use section 118 makes control so that the prescribed amount of electronic value is paid to the host device 20 from the non-contact type IC card 1 which is selected by the card selection section 115. Specifically, in the state where the host device 20 and the selected non-contact type IC card 1 are communicably connected with each other, the value use section 118 outputs the payment request which is transmitted from the reader/writer 21 to the non-contact type IC card 1 to thereby direct the payment, and then relays the transmission/reception of commands and data between the non-contact type IC card 1 and the reader/writer 21 after that.

The configuration of the electronic wallet device 10 according to the present embodiment is described in the foregoing with reference to FIG. 4. The functional sections 111 to 118 of the control section 110 shown in FIG. 4 may be implemented by installing program for executing each function on the electronic wallet device 10 or by mounting dedicated hardware.

The advantages of the electronic wallet device 10 having the above-described configuration are described hereinafter. In an existing typical common IC card system, data transmission and reception are performed directly between the host device 20 including the reader/writer 21 and the non-contact type IC card 1, and electronic value is directly read from or written to the storing section 15 of the non-contact type IC card 1 according to a content of a transaction as shown in FIG. 3. In such a case, because the non-contact type IC card 1 is anonymous, if the card is lost, a person who has found the card can freely use the electronic value charged in the non-contact type IC card 1, which is not secure.

On the other hand, the electronic wallet device 10 according to this embodiment includes the value storing section 108 which is capable of storing electronic value for various kinds of services and it can transfer the electronic value between the non-contact type IC card 1 and the value storing section 108. Further, the electronic wallet device 10 is a non-anonymous device which stores owner information so that identity authentication can be performed based on the owner information, and the electronic wallet device 10 can further hold an anonymous non-contact type IC card 1. The electronic wallet device 10 stores electronic value in the value storing section 108 of the non-anonymous electronic wallet device 10 rather than in the anonymous non-contact type IC card 1 during normal time when not using electronic money or the like, and it transfers the electronic value from the value storing section 108 to the non-contact type IC card 1 which corresponds to a target service only at the time of using the electronic value.

In this configuration, during normal time, electronic value is stored in the non-anonymous electronic wallet device 10, and there is no or small amount of electronic value in the non-contact type IC card 1. Accordingly, even if the electronic wallet device 10 is lost, a person who has found the electronic wallet device 10 is unable to use the electronic value in the electronic wallet device 10, thus ensuring security. On the other hand, at the time of using electronic value, the electronic value is transferred from the non-anonymous electronic wallet device 10 to the anonymous non-contact type IC card 1 and used as anonymous electronic money, thus ensuring anonymity of the electronic money so that use of the electronic money is kept unknown to others. Therefore, the electronic wallet device 10 according to the embodiment of the present invention enables use of electronic money or the like which ensures security and maintains anonymity. Further, electronic value for the same kind or different kinds of electronic money services can be collectively managed using the value storing section 108, which allows flexible coping with use of various kinds of electronic money services.

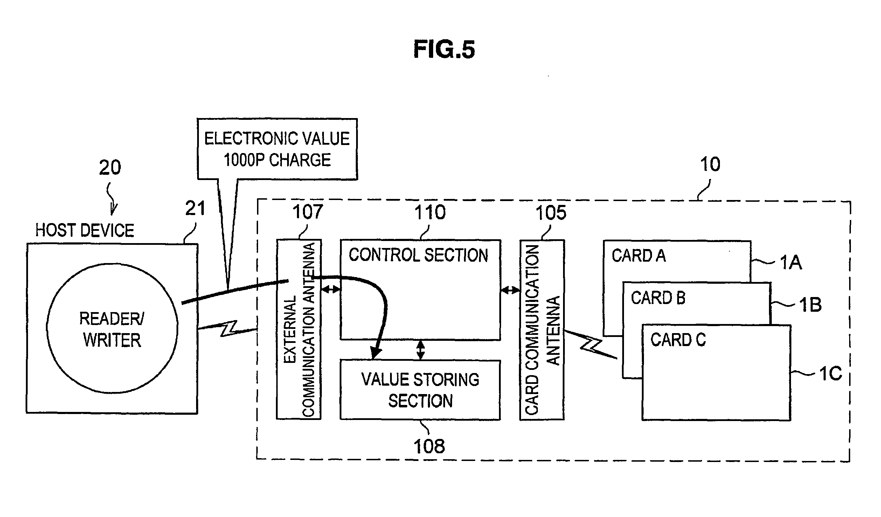

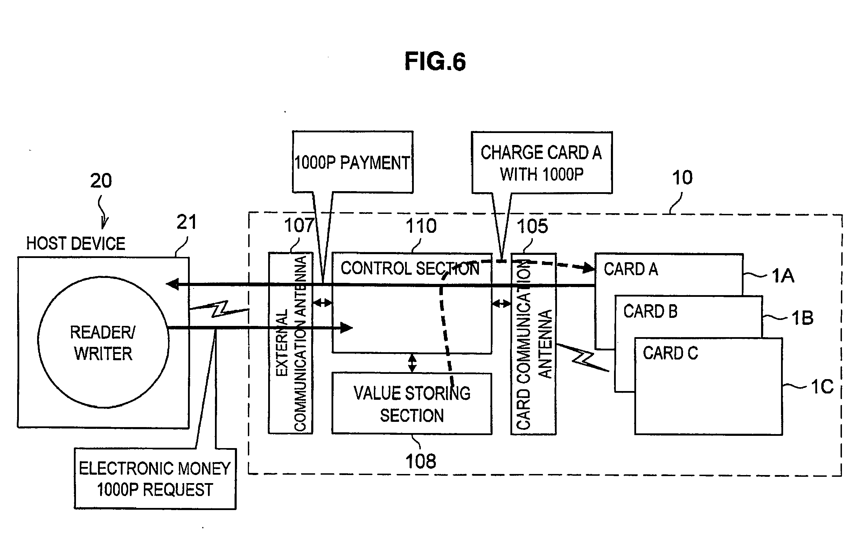

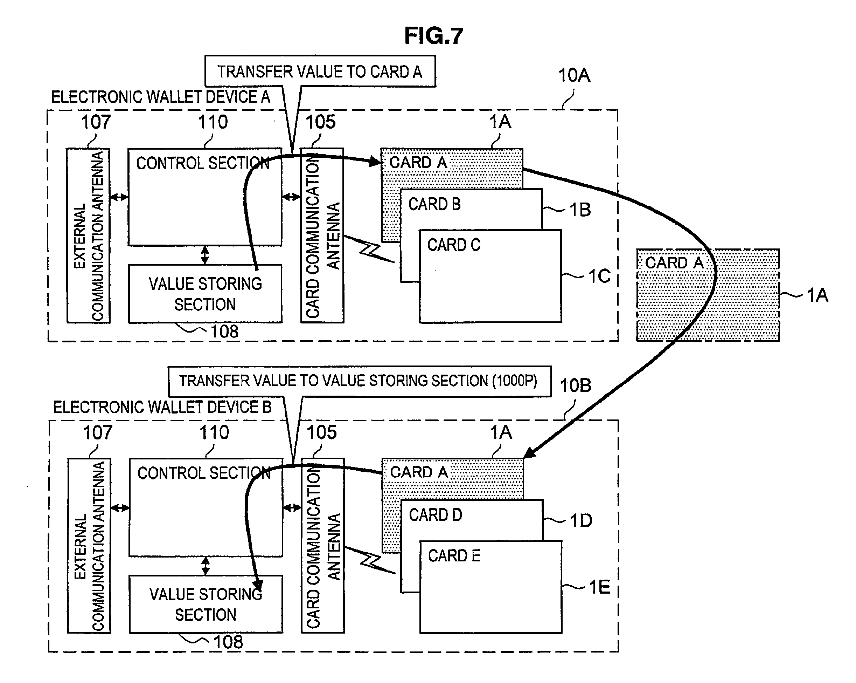

Referring then to FIGS. 5 to 7, the outline of a method of using electronic value by means of the above-described electronic wallet device 10 is described hereinbelow. FIG. 5 is an explanatory view showing the scheme of charge of electronic value in the electronic wallet device 10 according to the embodiment. FIG. 6 is an explanatory view showing the scheme of use of electronic value in the electronic wallet device 10 according to the embodiment. FIG. 7 is an explanatory view showing the scheme of transfer of electronic value between a plurality of electronic wallet devices according to the embodiment. In FIGS. 5 to 7, the configuration of the electronic wallet device 10 shown in FIG. 4 is illustrated in a simplified form.

As shown in FIG. 5, when charging the electronic wallet device 10 with electronic value from the reader/writer 21 of the host device 20, the electronic value to be charged (e.g. 1000 points) is stored into the value storing section 108 of the electronic wallet device 10, not into the non-contact type IC card 1. In this manner, a user can have the value storing section 108 of the non-anonymous electronic wallet device 10 function as a bank account, for example, so as to keep the own electronic value safely.

Then, as shown in FIG. 6, when using electronic money, the electronic value which is stored in the value storing section 108 of the non-anonymous electronic wallet device 10 is transferred (charged) to the anonymous non-contact type IC card 1A and used by the non-contact type IC card 1A. Specifically, when the control section 110 of the electronic wallet device 10 receives a prescribed amount of payment request (e.g. 1000 points) from the reader/writer 21 of the host device 20, it transfers (charges) the electronic value which is stored in the value storing section 108 to the non-contact type IC card 1A that corresponds to the kind of the electronic money service A to be used. Then, the non-contact type IC card 1A which has received the transferred electronic value communicates with the reader/writer 21 and makes payment of the requested prescribed amount of electronic value (e.g. 1000 points) out of the electronic value which is stored in the card 1A to the host device 20. If the electronic value which is stored in the value storing section 108 is transferred (charged) to the non-contact type IC card 1A, the transferred electronic value functions as anonymous electronic money which can be used for the electronic money service A to which the non-contact type IC card 1 A corresponds.

As described in the forgoing, the electronic wallet device 10 according to the embodiment allows the electronic value stored in the value storing section 108 to be used as common electronic value for various kinds of electronic money services. At the time of using the electronic value, the electronic wallet device 10 transfers the electronic value to the non-contact type IC card 1A and then uses the transferred electronic value from the non-contact type IC card 1A to the host device 20, rather than using the electronic value directly from the value storing section 108 to the host device 20. When the electronic value which is stored in the non-anonymous electronic wallet device 10 is used through the anonymous non-contact type IC card 1 in this manner, information about a user does not remain because of anonymity of electronic money. Accordingly, a user can use electronic money relatively freely without worry that the purpose, time and amount of use and so on of the electronic money are known to others.

Further, by interchanging the non-contact type IC card 1A between a plurality of electronic wallet devices 10 as shown in FIG. 7, it is possible to transfer electronic value between the plurality of electronic wallet devices 10, which enables a settlement using electronic money between individuals.

Specifically, referring to FIG. 7, users A and B respectively have electronic wallet devices 10A and 10B, non-contact type IC cards 1A to 1C are inserted to the electronic wallet device 10A, and non-contact type IC cards 1D and 1E are inserted to the electronic wallet device 10B, for example. In this state, assume the case of transferring electronic value from the electronic wallet device 10A to the electronic wallet device 10B using the non-contact type IC card 1A. First, a prescribed amount of electronic value (e.g. 1000 points) is transferred (charged) from the value storing section 108 to the non-contact type IC card 1A which is inserted to the electronic wallet device 10A. Next, the non-contact type IC card 1A is removed from the electronic wallet device 10A and inserted into the electronic wallet device 10B. Then, in the electronic wallet device 10B, the prescribed amount of electronic value (e.g. 1000 points) is transferred (charged) from the non-contact type IC card 1A to the value storing section 108. After completing the transfer, the non-contact type IC card 1A is put back to the electronic wallet device 10A. As a result, the prescribed amount of electronic value is transferred from the electronic wallet device 10A to the electronic wallet device 10B, thereby allowing an electronic settlement to be conducted between individuals, users A and B. Such an electronic settlement between individuals using the electronic wallet devices 10 is useful in the case of paying for the bill in a restaurant or the like with an electronic money card of one person when splitting the bill equally among all, for example.

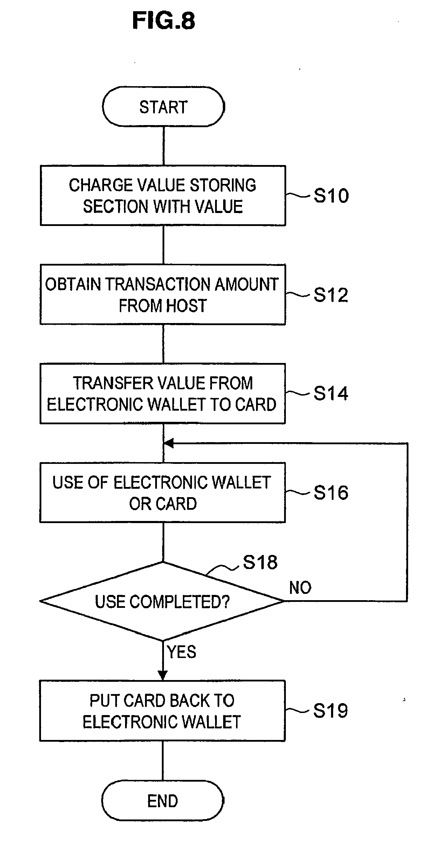

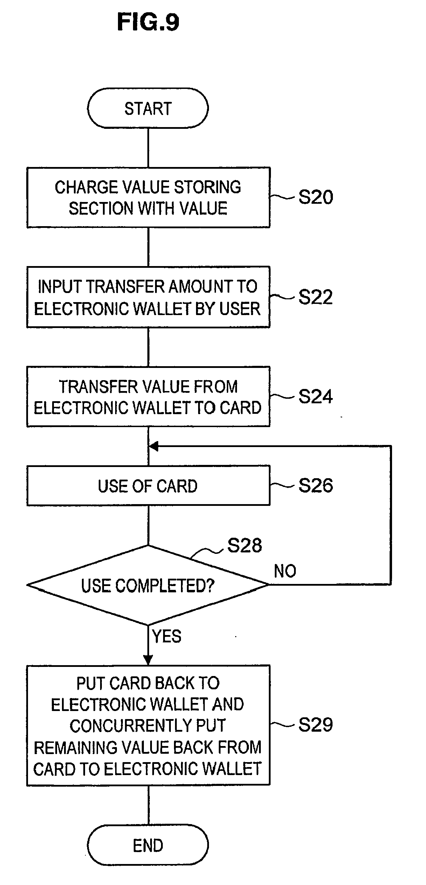

Referring now to FIGS. 8 and 9, the processing flow of the method of using electronic value in the electronic wallet device 10 according to the embodiment of the present invention is described hereinbelow. FIGS. 8 and 9 are the flowchart showing the method of using electronic value in the electronic wallet device 10 according to the embodiment.

FIG. 8 shows the case that the electronic wallet device 10 transfers the amount of electronic value that is a requested transaction amount from the host device 20 from the value storing section 108 to the non-contact type IC card 1 and uses the electronic value. As shown in FIG. 8, a user holds the electronic wallet device 10 over the reader/writer 21 of the host device 20 in order to charge the electronic wallet device 10 with electronic value, and the control section 110 of the electronic wallet device 10 charges the value storing section 108 with the prescribed amount of electronic value by performing non-contact communication with the reader/writer 21 of the host device 20 (step S 10).

Then, in the event of a transaction using electronic money, the control section 110 of the electronic wallet device 10 receives a transaction request from the host device 20 with which the transaction is to be conducted and acquires a transaction amount which is included in the transaction request (step S12). For example, when a user holds the electronic wallet device 10 over the reader/writer 21 of the host device 20 at the time of purchasing a product at a store or the like, the control section 110 receives, from the host device 20, a payment request for the amount corresponding to the purchase price (transaction amount) concerning electronic money of the electronic money service to which the host device 20 corresponds. The transaction amount indicates the amount of electronic value to be used in the transaction which is requested by the host device 20, and it may be a payment amount in a payment request of electronic money, for example.

Further, the control section 110 of the electronic wallet device 10 transfers the transaction amount of electronic value which is acquired in the step S 12 from the value storing section 108 to the non-contact type IC card 1 after performing identity authentication of an owner (step S14). The non-contact type IC card 1 to which the electronic value is transferred is automatically selected so as to correspond to the electronic money service that is provided by the host device 20 from which the transaction request is made (refer to the above description about the card selecting section 115). As a result of the transfer of the electronic value in the step S 14, the amount of electronic value which is stored in the non-contact type IC card 1 to be used for payment of the electronic value (a payment card) becomes equal or larger than the transaction amount (e.g. the payment amount).

After that, the electronic value which corresponds to the transaction request is used for the host device 20 by means of the non-contact type IC card 1 to which the electronic value is transferred or the electronic wallet device 10 itself (step S16). For example, when using the electronic value with the non-contact type IC card 1, a user may hold the electronic wallet device 10 which contains the relevant non-contact type IC card 1 over the reader/writer 21, or may hold the relevant non-contact type IC card 1 alone over the reader/writer 21 after taking it out of the electronic wallet device 10.

When using the non-contact type IC card 1 placed inside the electronic wallet device 10 without taking it out, the control section 110 of the electronic wallet device 10 makes control so as to pay the requested payment amount of electronic value to the host device 20 using the electronic value which is stored in the non-contact type IC card 1 that has received the transferred electronic value. In response to a direction from the control section 110, the relevant non-contact type IC card 1 exchanges a command or data regarding payment of the electronic value with the reader/writer 21 and reduces the electronic value stored in the non-contact type IC card 1 by the payment amount. In this manner, when using electronic value with the anonymous non-contact type IC card 1, a user can easily use it, taking advantage of the anonymity of electronic money, without performing authentication processing or the like.

On the other hand, it is also feasible to perform a direct transaction (e.g. payment of the payment amount of electronic value) with the host device 20 without the intermediary of the non-contact type IC card 1 using the electronic value which is stored in the value storing section 108 of the electronic wallet device 10. In such a case, because it is a transaction using the non-anonymous electronic wallet device 10, security of electronic money is ensured by performing identity authentication of an owner of the electronic wallet device 10, for example.

Then, if the use of the electronic value with the non-contact type IC card 1 is completed (step S 18), the non-contact type IC card 1 is returned to the holding section 102 of the electronic wallet device 10 (step S19). The whole process thereby ends.

FIG. 9 shows the case that electronic wallet device 10 transfers the amount of electronic value which is specified by a user from the value storing section 108 to the non-contact type IC card 1 and uses the electronic value. As shown in FIG. 9, a user holds the electronic wallet device 10 over the reader/writer 21 of the host device 20 in order to charge the electronic wallet device 10 with electronic value, and the control section 110 of the electronic wallet device 10 charges the value storing section 108 with the prescribed amount of electronic value by performing non-contact communication with the reader/writer 21 of the host device 20 (step S20).

Next, the user inputs a transfer amount of electronic value by manipulating the operating section 103 of the electronic wallet device 10, and the control section 110 sets the amount specified by the user as a transfer amount of electronic value and registers it onto the storing section 109 (step S22).

Further, the control section 110 of the electronic wallet device 10 transfers the transfer amount of electronic value which is set in the step S22 from the value storing section 108 to the non-contact type IC card 1 after performing identity authentication of an owner (step S24). The non-contact type IC card 1 to which the electronic value is transferred is automatically selected so as to correspond to the electronic money service that is provided by the host device 20 from which the transaction request is made (refer to the above description about the card selecting section 115). As a result of the transfer of the electronic value in the step S24, the amount of electronic value which is stored in the non-contact type IC card 1 to be used for payment of the electronic value (a payment card) becomes equal or larger than the transaction amount (e.g. the payment amount).

After that, upon occurrence of a transaction of electronic money, the electronic value which corresponds to the transaction request is used for the host device 20 with use of the non-contact type IC card 1 to which the electronic value is transferred (step S26). For example, when using the electronic value with the non-contact type IC card 1, a user may hold the electronic wallet device 10 which contains the relevant non-contact type IC card 1 over the reader/writer 21, or may hold the relevant non-contact type IC card 1 alone over the reader/writer 21 after taking it out of the electronic wallet device 10. The detail of this step is the same as that of the step S16 in FIG. 8 and thus not described herein.

Then, if the use of the electronic value with the non-contact type IC card 1 is completed (step S28), the non-contact type IC card 1 is returned to the holding section 102 of the electronic wallet device 10, and all of the electronic value which remains in the non-contact type IC card 1 is returned to the value storing section 108 of the electronic wallet device 10 (step S29). The whole process thereby ends.

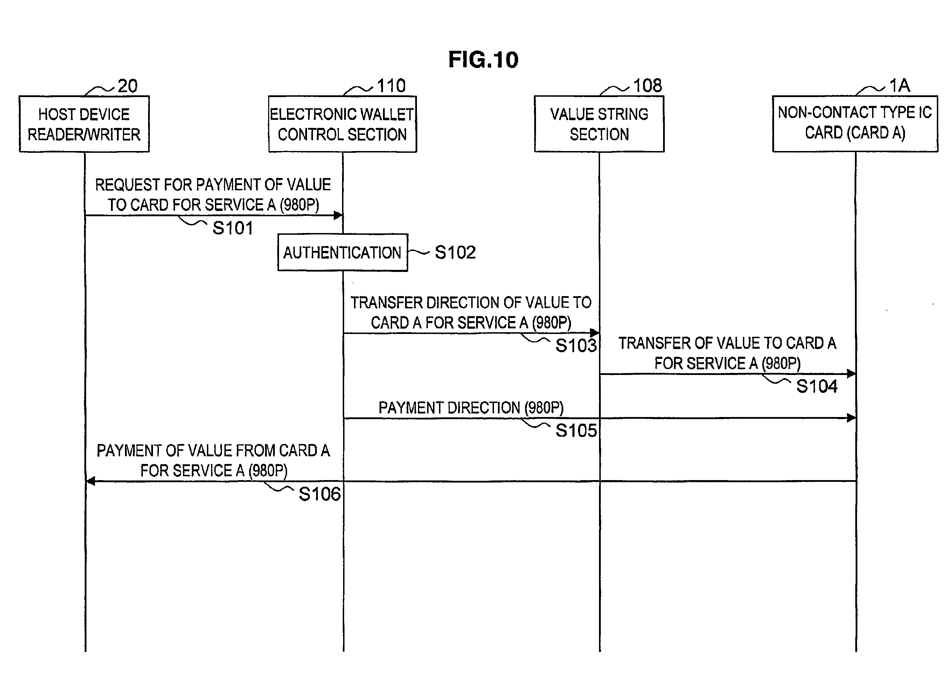

Referring now to FIG. 10, an example of electronic value payment process in the electronic wallet device 10 of the embodiment is described hereinafter in detail. FIG. 10 shows the case of paying electronic value to the host device 20 after transferring the amount of electronic value that is a requested payment amount by the host device 20 from the value storing section 108 of the electronic wallet device 10 to the non-contact type IC card 1A upon occurrence of a transaction.

As shown in FIG. 10, the reader/writer 21 of the host device 20 transmits a payment request of a prescribed amount (980 points) of electronic money which corresponds to the electronic money service A to the electronic wallet device 10 (step S101). In response to the payment request from the reader/writer 21, the control section 110 of the electronic wallet device 10 selects the non-contact type IC card 1A which corresponds to the electronic money service A (which is hereinafter referred to as the electronic money card A) from a plurality of non-contact type IC cards 1A to 1C which are held in the holding section 102, as a payment card to execute payment of electronic value.

Next, the control section 110 performs identity authentication of an owner of the electronic wallet device 10 (step S102). For example, the identity authentication may be authentication using a password, biometric authentication, authentication using a physical key, or the like. On condition that the authentication in the step S102 is successful, electronic value transfer processing in the subsequent step S103 can be performed. This reduces a risk of loss, theft or the like attendant on transferring electronic value from the non-anonymous electronic wallet device 10 to the anonymous electronic money card A, thereby ensuring security of electronic money. If the identity authentication is failed, there is a possibility that a holder of the electronic wallet device 10 is not a rightful owner, and therefore the process ends in error. If a transfer amount is smaller than a prescribed amount, the authentication processing may be bypassed, giving preference to convenience of a rightful owner during normal time over security against loss or theft.

After that, the control section 110 makes a direction to transfer the requested payment amount of electronic value (980 points) from the value storing section 108 to the electronic money card A (step S103). In response thereto, the requested payment amount of electronic value (980 points) out of the electronic value stored in the value storing section 108 is transferred to the electronic money card A (step S104).

Further, the control section 110 transmits a payment direction to the electronic money card A (step S105). In response to the payment direction, the electronic money card A performs a transaction with the reader/writer 21 of the host device 20 via the electronic wallet device 10 and pays the requested payment amount of electronic value (980 points) to the host device 20 (step S106). The electronic value payment processing is performed by reducing the amount of electronic value which is stored in the electronic money card A (980 points) by the requested payment amount (980 points) and transmitting a notification to the host device 20.

As described above, in the event of a transaction with the host device 20, the electronic wallet device 10 transfers the requested payment amount of electronic value from the value storing section 108 to the electronic money card A and executes payment. This enables transfer of the electronic value without any excess, so that there is no electronic value remaining in the electronic money card A after the payment.

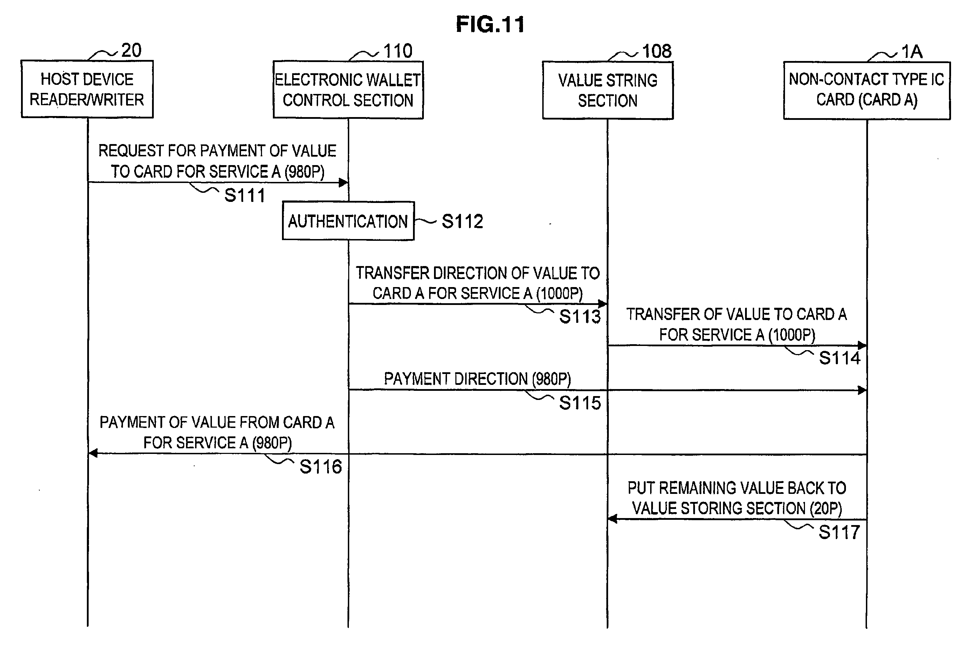

Referring then to FIG. 11, another example of electronic value payment process in the electronic wallet device 10 of the embodiment is described hereinafter in detail. FIG. 11 shows the case of paying electronic value to the host device 20 after transferring a prescribed set amount of electronic value from the value storing section 108 of the electronic wallet device 10 to the non-contact type IC card 1A upon occurrence of a transaction.

As shown in FIG. 11, the reader/writer 21 of the host device 20 transmits a payment request for a prescribed amount (980 points) concerning the electronic money which corresponds to the electronic money service A to the electronic wallet device 10 (step S111). Then, like the above-described step S101, the control section 110 of the electronic wallet device 10 selects the electronic money card A as a payment card to execute payment of electronic value.

Next, the control section 110 performs identity authentication of an owner of the electronic wallet device 10 (step S 112). The step S 112 is substantially the same as the above-described step S 102 and thus not described in detail herein.

Then, the control section 110 makes a direction to transfer a prescribed set amount of electronic value (e.g. 1000 points) from the value storing section 108 to the electronic money card A (step S 113). In response thereto, the prescribed set amount of electronic value (e.g. 1000 points) out of the electronic value stored in the value storing section 108 is transferred to the electronic money card A (step S 114). In this manner, a prescribed set amount of electronic value is transferred regardless of a requested payment amount from the host device 20 in this process flow. A prescribed set amount may be a default value (fixed value) that is set in advance or an amount that is set arbitrarily by the control section 110.

After that, the control section 110 transmits a payment direction to the electronic money card A (step S115). In response to the payment request, the electronic money card A conducts a transaction with the reader/writer 21 of the host device 20 via the electronic wallet device 10 and pays the requested payment amount of electronic value (980 points) to the host device 20 (step S 116). As a result, the amount of electronic value that is a difference between the prescribed set amount and the requested payment amount (20 points) remains in the electronic money card A. Therefore, the control section 110 transfers the remaining amount of electronic value (20 points) from the non-contact type IC card 1 to the value storing section 108, thereby returning the electronic value to the value storing section 108 where it is originally stored (step S 117).

As described above, upon occurrence of a transaction with the host device 20, the electronic wallet device 10 transfers the prescribed set amount of electronic value from the value storing section 108 to the electronic money card A to make payment, and then returns the remaining amount of electronic value from the electronic money card A to the electronic wallet device 108. Accordingly, even if a requested payment amount is unknown in advance, it is possible to transfer a reasonable amount of electronic value from the electronic wallet device 108 to the electronic money card A and, after payment, retrieve the remaining electronic value so that there is no electronic value remaining in the electronic money card A.

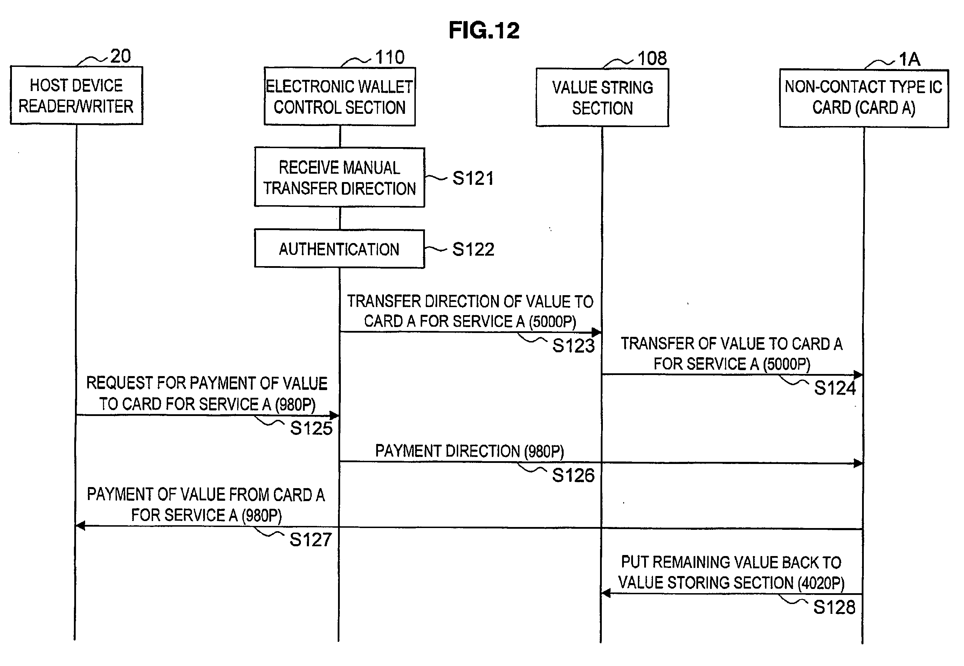

Referring finally to FIG. 12, another example of electronic value payment process in the electronic wallet device 10 of the embodiment is described hereinafter in detail. FIG. 12 shows the case of paying electronic value to the host device 20 after transferring the amount of electronic value which is specified manually by a user from the value storing section 108 to the non-contact type IC card 1A prior to the occurrence of a transaction.

As shown in FIG. 12, before a transaction between the host device 20 and the electronic wallet device 10 occurs, the control section 110 of the electronic wallet device 10 accepts a transfer direction which is input manually by a user (step S121 ). By the transfer direction, the amount of electronic value to be transferred from the value storing section 108 to the non-contact type IC card 1 (5000 points) is directed manually by a user. Further, at this time, a user selects the electronic money card A which corresponds to a desired electronic money service A as a payment card to execute payment of the electronic value, for example.

Next, the control section 110 performs identity authentication of an owner of the electronic wallet device 10 (step S122). The step S 122 is substantially the same as the above-described step S102 and thus not described in detail herein. If, as a result of the authentication, the user who has manually input the transfer direction in the step S121 is verified to be a rightful owner of the electronic wallet device 10, the subsequent electronic value transfer processing is carried out.

Then, the control section 110 makes a direction to transfer the manually directed amount of electronic value (e.g. 5000 points) from the value storing section 108 to the electronic money card A (step S123). In response thereto, the manually directed amount of electronic value (e.g. 5000 points) out of the electronic value stored in the value storing section 108 is transferred to the electronic money card A which is selected by the user (step S214). In this manner, the desired amount of electronic value which is directed by a user is transferred to the electronic money card A prior to the occurrence of a transaction with the host device 20.

Then, a transaction between the host device 20 and the electronic wallet device 10 occurs, and the reader/writer 21 of the host device 20 transmits a payment request of a prescribed amount (980 points) for the electronic money which corresponds to the electronic money service A to the electronic wallet device 10 (step S125). In response to the payment request, the control section 110 checks whether the balance of electronic value which is stored in the electronic money card A (5000 points) is equal or larger than the requested payment amount (980 points), and if it is so, transmits a payment direction to the electronic money card A (step S126). In response to the payment direction, the electronic money card A conducts a transaction with the reader/writer 21 of the host device 20 via the electronic wallet device 10 and pays the requested payment amount of electronic value (980 points) to the host device 20 (step S127). As a result, the amount of electronic value that is a difference between the prescribed set amount and the requested payment amount (4020 points) remains in the electronic money card A. Therefore, the control section 110 transfers the remaining amount of electronic value (4020 points) from the non-contact type IC card 1 to the value storing section 108, thereby returning the electronic value to the value storing section 108 where it is originally stored (step S128).

As described above, the electronic wallet device 10 transfers the amount of electronic value which is desired by a user from the value storing section 108 to the electronic money card A prior to the occurrence of a transaction with the host device 20 and, after the occurrence of payment, executes given payment as appropriate, and then returns the final remaining amount from the electronic money card A to the value storing section 108. It is thereby possible to transfer a relatively large amount of electronic value as desired by a user to the electronic money card A beforehand in preparation for the case of executing payment processing a plurality of times or the case of performing a large amount of payment. This reduces the number of times of identity authentication which is necessary upon electronic value transfer, thereby increasing convenience for a user.

The electronic wallet device 10 and the electronic value use method and the transaction method using the electronic wallet device 10 according to the embodiment of the present invention are described in the foregoing. According to the embodiment, it is possible to provide the electronic wallet device 10 that combines the anonymous non-contact type IC card having anonymity (e.g. an electronic money card etc.) and the non-anonymous electronic wallet device having security, which maintains anonymity of electronic money and an advantage of non-anonymity at the same time.

Specifically, during normal time when not using electronic money, the electronic wallet device 10 of the embodiment stores electronic value in the non-anonymous electronic wallet device 10 without storing any electronic value in the anonymous non-contact type IC card 1 to leave it empty, and only at the time of using electronic value, it temporarily transfers the electronic value from the electronic wallet device 10 to the non-contact type IC card 1. In such a configuration, an electric value is stored safely in the non-anonymous electronic wallet device 10 during normal time. Accordingly, even when the non-anonymous electronic wallet device 10 is lost, a person who has found it is unable to use the electronic value in the electronic wallet device 10 because identity authentication is failed. Even if the non-contact type IC card 1 is removed from the electronic wallet device 10, there is no or little amount of electronic value in the non-contact type IC card 1, so that damages are limited. Therefore, the electronic wallet device 10 has high security against loss or theft, which allows a user to use the electronic wallet device 10 with safe. On the other hand, at the time of use, the electronic value which is transferred from the non-anonymous electronic wallet device 10 to the anonymous non-contact type IC card is used as anonymous electronic money. This maintains the anonymity of electronic money, so that the purpose of use or the like of the electronic money is kept unknown to others. A user can thereby use electronic value relatively freely, which is convenient. Hence, the electronic wallet device 10 of the embodiment can implement uses of electronic money, points, coupons and so on which maintain anonymity and ensures security.

Further, according to the embodiment, the electronic wallet device 10 includes the value storing section 108 which functions as a cache to electronic value for various kinds of services, so that electronic value can be flexibly transferred between the value storing section 108 and the non-contact type IC card 1 regardless of the kind of services. The electronic wallet device 10 can thereby flexibly cope with a plurality of non-contact type IC cards 1 which correspond to the same or different kinds of services and thus collectively manage electronic value to be used for a plurality of services. It is therefore possible to flexibly cope with uses of the same or different kinds of non-contact type IC cards, thereby increasing convenience for a user who owns a plurality of non-contact type IC cards 1.

Further, because electronic value can be transferred between the plurality of electronic wallet devices 10 via the non-contact type IC card 1 as shown in FIG. 7, it is possible to perform a settlement between individuals using electronic money.

Further, according to the embodiment, a user can carry a plurality of non-contact type IC cards 1 collectively by holding them in the electronic wallet device 10. At the time of using the non-contact type IC card 1, a user simply holds the electronic wallet device 10 over the reader/writer 21 of the host device 20, and the electronic wallet device 10 automatically selects the non-contact type IC card 1 which is appropriate for use in communication with the reader/writer 21 and establishes communication between the non-contact type IC card 1 and the reader/writer 21. At this time, only the selected non-contact type IC card 1 can suitably communicate with the reader/writer 21 without being interfered by the other non-contact type IC cards 1.

Because the electronic wallet device 10 selects only one appropriate non-contact type IC card 1 and establishes communication with the reader/writer 21, it is possible to execute communication appropriately between the selected non-contact type IC card 1 and the reader/writer 21 regardless of whether each non-contact type IC card 1 held therein or the reader/writer 21 supports the anti-collision function. This allows a user to carry a plurality of non-contact type IC cards 1 collectively and use them even if the cards do not support the anti-collision function.

It should be understood by those skilled in the art that various modifications, combinations, sub-combinations and alterations may occur depending on design requirements and other factors insofar as they are within the scope of the appended claims or the equivalents thereof.

For example, although the electronic wallet device 10 of the above-described embodiment is configured in a single unit, embodiments of the present invention are not limited thereto. For example, the electronic wallet device can be combined with a portable terminal such as a mobile phone, a personal digital assistant (PDA), an electronic organizer, or a portable video/audio player.

Further, the electronic wallet device 10 according to the above-described embodiment has a housing structure that inserts three non-contact type IC cards 1A to 1C in parallel in the same direction. However, the number of non-contact type IC cards which can be held in the electronic wallet device, the direction of insertion, the location of held cards and so on are not limited to those described in the above embodiment.

Furthermore, the case of paying a requested amount of electronic money requested by the host device 20 with use of the electronic wallet device 10 which holds a plurality of electronic money cards is mainly described in the above-described embodiments. However, the present invention is not limited thereto. For example, embodiments of the present invention may be applied to the case of paying a transportation fee to an automatic transportation ticket gate with use of the electronic wallet device 10 which holds a plurality of transportation fee cards, the case of exchanging electronic value concerning a point or a coupon with the host device 20 with use of the electronic wallet device 10 which holds a plurality of point/coupon cards and so on.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Other aspects and features of the invention are set out in the following numbered clauses:
1. An electronic wallet device using electronic value concerning a prescribed service by means of a non-contact type IC card capable of non-contact communication with an external unit, comprising:
   a holding section to hold the non-contact type IC card;
   an external communication antenna to perform non-contact communication with the external unit;
   a card communication antenna to perform non-contact communication with the non-contact type IC card held in the holding section;
   a value storing section capable of storing electronic value;
   a charge section to charge the value storing section with electronic value by communicating with the external unit via the external communication antenna;
   an authentication section to perform authentication of an owner of the electronic wallet device; and
   a value transfer section to transfer electronic value stored in the value storing section to the non-contact type IC card via the card communication antenna on condition of success of authentication by the authentication section when using electronic value by means of the non-contact type IC card.
2. The electronic wallet device according to clause 1, further comprising:
   a communication section to receive a transaction request concerning the service from the external unit via the external communication antenna, wherein
   the value transfer section transfers the amount of electronic value specified by the transaction request from the value storing section to the non-contact type IC card.
3. The electronic wallet device according to clause 1, further comprising:
   a transfer amount setting section to set the amount of electronic value to be transferred from the value storing section to the non-contact type IC card, wherein
   the value transfer section transfers the amount of electronic value set by the transfer amount setting section from the value storing section to the non-contact type IC card.
4. The electronic wallet device according to clause 1, wherein
   the value transfer section transfers electronic value stored in the non-contact type IC card inserted in the holding section to the value storing section.
5. The electronic wallet device according to clause 1, wherein
   authentication of an owner of the electronic wallet device is performed by the authentication section when transferring electronic value from the value storing section to the non-contact type IC card, and
   authentication of an owner of the non-contact type IC card is not performed when performing a transaction of electronic value between the external unit and the non-contact type IC card via the electronic wallet device.
6. The electronic wallet device according to clause 1, wherein
   electronic value stored in the non-contact type IC card is electronic value specific to a service to which the non-contact type IC card corresponds, and
   electronic value stored in the value storing section is electronic value common to a plurality of services.
7. The electronic wallet device according to clause 1, further comprising:
   a value use section to use electronic value stored in the value storing section for the external unit on condition of success of authentication by the authentication section or transmission of owner information of the electronic wallet device to the external unit, when using electronic value for the external unit by means of the electronic wallet device without using the non-contact type IC card.
8. A method of using electronic value concerning a prescribed service by means of a non-contact type IC card in an electronic wallet device including a holding section to hold the non-contact type IC card capable of non-contact communication with an external unit, an external communication antenna to perform non-contact communication with the external unit, a card communication antenna to perform non-contact communication with the non-contact type IC card held in the holding section, and a value storing section capable of storing electronic value, the method comprising the steps of:
   charging the value storing section with electronic value by communicating with the external unit via the external communication antenna;
   performing authentication of an owner of the electronic wallet device; and
   transferring electronic value stored in the value storing section to the non-contact type IC card via the card communication antenna on condition of success of authentication of the owner of the electronic wallet device when using electronic value by means of the non-contact type IC card.

## Claims

1. An electronic wallet device using electronic value concerning a prescribed service by means of a non-contact type IC card capable of non-contact communication with an external unit, comprising:
a holding section to hold the non-contact type IC card;
an external communication antenna to perform non-contact communication with the external unit;
a card communication antenna to perform non-contact communication with the non-contact type IC card held in the holding section;
a value storing section capable of storing electronic value;
a charge section to charge the value storing section with electronic value by communicating with the external unit via the external communication antenna;
an authentication section to perform authentication of an owner of the electronic wallet device; and
a value transfer section to transfer electronic value stored in the value storing section to the non-contact type IC card via the card communication antenna on condition of success of authentication by the authentication section when using electronic value by means of the non-contact type IC card; wherein:
electronic value stored in the non-contact type IC card is electronic value specific to a service to which the non-contact type IC card corresponds, and
electronic value stored in the value storing section is electronic value common to a plurality of services.

2. The electronic wallet device according to claim 1, further comprising:
a communication section to receive a transaction request concerning the service from the external unit via the external communication antenna, wherein
the value transfer section transfers the amount of electronic value specified by the transaction request from the value storing section to the non-contact type IC card.

3. The electronic wallet device according to claim 1, further comprising:
a transfer amount setting section to set the amount of electronic value to be transferred from the value storing section to the non-contact type IC card, wherein
the value transfer section transfers the amount of electronic value set by the transfer amount setting section from the value storing section to the non-contact type IC card.

4. The electronic wallet device according to claim 1, wherein
the value transfer section transfers electronic value stored in the non-contact type IC card inserted in the holding section to the value storing section.

5. The electronic wallet device according to claim 1, wherein
authentication of an owner of the electronic wallet device is performed by the authentication section when transferring electronic value from the value storing section to the non-contact type IC card, and
authentication of an owner of the non-contact type IC card is not performed when performing a transaction of electronic value between the external unit and the non-contact type IC card via the electronic wallet device.

6. The electronic wallet device according to claim 1, further comprising:
a value use section to use electronic value stored in the value storing section for the external unit on condition of success of authentication by the authentication section or transmission of owner information of the electronic wallet device to the external unit, when using electronic value for the external unit by means of the electronic wallet device without using the non-contact type IC card.

7. A method of using electronic value concerning a prescribed service by means of a non-contact type IC card in an electronic wallet device including a holding section to hold the non-contact type IC card capable of non-contact communication with an external unit, an external communication antenna to perform non-contact communication with the external unit, a card communication antenna to perform non-contact communication with the non-contact type IC card held in the holding section, and a value storing section capable of storing electronic value, the method comprising the steps of:
charging the value storing section with electronic value by communicating with the external unit via the external communication antenna;
performing authentication of an owner of the electronic wallet device; and
transferring electronic value stored in the value storing section to the non-contact type IC card via the card communication antenna on condition of success of authentication of the owner of the electronic wallet device when using electronic value by means of the non-contact type IC card; wherein:
electronic value stored in the non-contact type IC card is electronic value specific to a service to which the non-contact type IC card corresponds, and
electronic value stored in the value storing section is electronic value common to a plurality of services.

8. A computer program for controlling an electric wallet device including a holding section to hold the non-contact type IC card capable of non-contact communication with an external unit, an external communication antenna to perform non-contact communication with the external unit, a card communication antenna to perform non-contact communication with the non-contact type IC card held in the holding section, and a value storing section capable of storing electronic value, the computer program controlling the electronic wallet device to perform the steps of:
charging the value storing section with electronic value by communicating with the external unit via the external communication antenna;
performing authentication of an owner of the electronic wallet device; and
transferring electronic value stored in the value storing section to the non-contact type IC card via the card communication antenna on condition of success of authentication of the owner of the electronic wallet device when using electronic value by means of the non-contact type IC card; wherein:
electronic value stored in the non-contact type IC card is electronic value specific to a service to which the non-contact type IC card corresponds, and
electronic value stored in the value storing section is electronic value common to a plurality of services.
